Europäisches Patentamt

European Patent Office

Office européen des brevets

(19)

(11) Publication number: **0 117 720**
**B1**

(12) # EUROPEAN PATENT SPECIFICATION

(45) Date of publication of patent specification: **07.09.88**

(51) Int. Cl.⁴: **B 29 C 47/10, B 29 C 45/16**

(21) Application number: **84301161.0**

(22) Date of filing: **23.02.84**

(54) A gear pump.

(30) Priority: **25.02.83 GB 8305214**

(43) Date of publication of application:
**05.09.84 Bulletin 84/36**

(45) Publication of the grant of the patent:
**07.09.88 Bulletin 88/36**

(84) Designated Contracting States:
**AT CH DE FR GB IT LI**

(56) References cited:
**CH-A- 433 202**
**GB-A-2 066 140**
**US-A-4 182 601**
**US-A-4 259 277**

(73) Proprietor: **PLCV LIMITED**
**6, Sloane Square**
**London SW1W 8EE (GB)**

(72) Inventor: **Hyman, David**
**13 Lower Croft Old Hall Park**
**Whitefield Manchester, M25 7NB (US)**
Inventor: **Hill, Alan Harvey**
**Deceased (GB)**

(74) Representative: **Downey, William Gerrard et al**
**WILSON, GUNN, ELLIS & CO. 41 Royal Exchange**
**Cross Street**
**Manchester M2 7BD (GB)**

Courier Press, Leamington Spa, England.

EP 0 117 720 B1

## Description

The present invention relates to apparatus and method for the processing of synthetic plastics material. The apparatus includes a gear pump and in the process an additive, such as a colourant, is introduced into the plastics material and is dispersed in the material during its passage through the gear pump. Apparatuses of this board general type are described in United Kingdom Specification Nos. 1,591,605, 1,601,698 and 2,066,140.

It has been found with existing apparatus that there is a tendency under some circumstances for colourant to accumulate in blobs disposed within the bulk of the plastics material. Not only does this result in an inefficient use of expensive colourant as the colourant only performs its function when visible on the surface of the material, but it also may result in mechanical weaknesses in the finished material. Further, where the material is to be used as electrical insulation, flaws may be caused by colourant blobs in the continuity of that insulation.

According to one aspect of the present invention, here is provided apparatus for processing material comprising a gear pump, means for supplying material to the gear pump, and means for supplying an additive to the material in which the pump comprises one or more pairs of intermeshing gears rotatably disposed in a housing an inlet path to the gears and an outlet path from the gears characterised in that a tunnel is provided in the housing for conducting material from an axial exit from between the intermeshing teeth of the gears on the output side to the periphery of the outlet path on the side of that path remote from the gears and a channel is provided in the housing from the periphery of the inlet path on its side remote from the gear teeth to an axial entry to the teeth of the gears at the inlet side of the gears.

In a preferred embodiment, the two gears of the gear pump are mounted on respective vertically arranged parallel shafts which are themselves mounted at one end in a base plate which forms part of the housing. The base plate defines tme tunnel which advantageously is V-shaped with the respective arms of the tunnel leading from the gear teeth and to the outlet path. The tunnel and channel may be spark eroded machined or produced in any other suitable way.

Further enhancement of colourant dispersal may be achieved by providing a channel leading from the periphery of the inlet path on its side remote from the gear teeth to the teeth of the gears at the inlet side of the gears. This channel may also be produced by spark erosion machining the surface of the base plate or in any other suitable way. This channel conducts colourant on the periphery of the plastics material stream in the inlet path on its side remote from the gear teeth axially into the gear teeth.

The gear pump may comprise more than one pair of gear teeth. The pump may, for example, be a triplex pump comprising three pairs of parallel gear teeth with the teeth of each pair separated by spacers from the teeth of adjacent pair(s). Each spacer is relieved on one side to promote flow of colourant axially along the teeth of the gears in one direction. Also, the housing wall opposite to the housing wall defining the tunnel may also be relieved for the same reason. Again these reliefs may be spark eroded machined or produced in any other suitable way.

According to another aspect of the present invention, there is provided a method of processing a material including the steps of feeding the material along an inlet to the pump, introducing an additive into the material, operating the pump to transfer material from the inlet path to the pump to the outlet path from the pump whilst dispersing the additive into the surface of the material characterised by the steps of conducting material from an axial exit from the teeth of the gears of the gear pump on the outlet side of the pump to the periphery of the material in the outlet path remote from the gears via a route separate to that followed by the bulk of the material through the pump, and conducting material from the periphery of the inlet path on its side remote from the gear teeth to an axial entry to the teeth of the gears at the inlet side of the gears to inhibit the passage of blobs of additive in an unsheared state through the pump.

In order that the invention may be more clearly understood two embodiments thereof will now be described, by way of example, with reference to the accompanying drawings, in which:—

Figure 1 shows a diagrammatic plan view of in section of a gear pump, taken along the line CC of Figure 2,

Figure 2 shows a diagrammatic side elevational view in section of the gear pump of Figure 1, taken along the line A—A of Figure 1,

Figure 3 shows a diagrammatic plan view in section of an alternative section of a gear pump to that shown in Figures 2 and 3, taken along the line DD of Figure 4,

Figure 4 shows a diagrammatic side elevation view of the gear pump of Figure 3, taken along line BB,

Figure 5 is a diagrammatic view a colourant metering system for use with the gear pumps of Figure 1 to 4,

Figure 6 is a general side elevational view of apparatus for the injection of colourant incorporating a gear pump of the type shown in Figures 1 and 2.

Figure 7 is a sectional view of the die forming part of the apparatus of Figure 6, and

Figure 8 is a cross sectional view at various points in the apparatus of Figure 6.

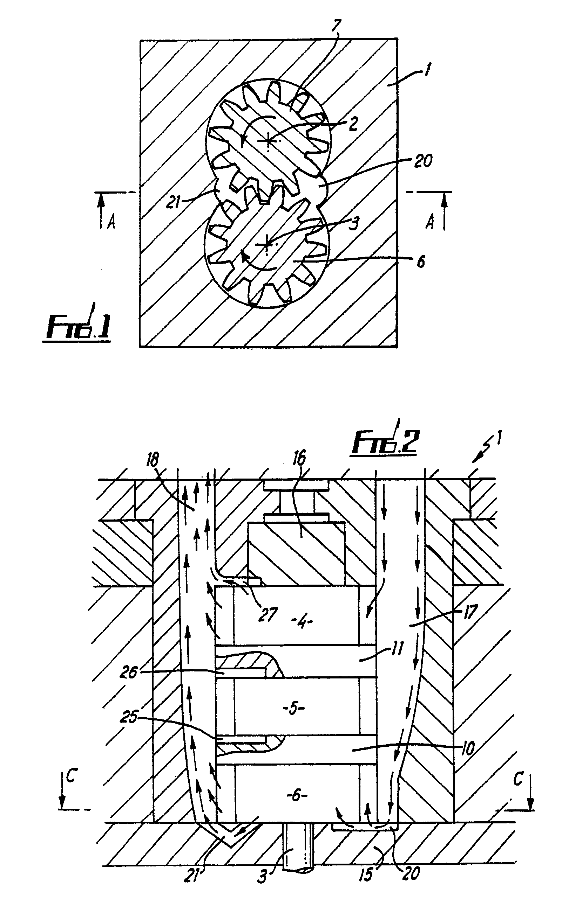

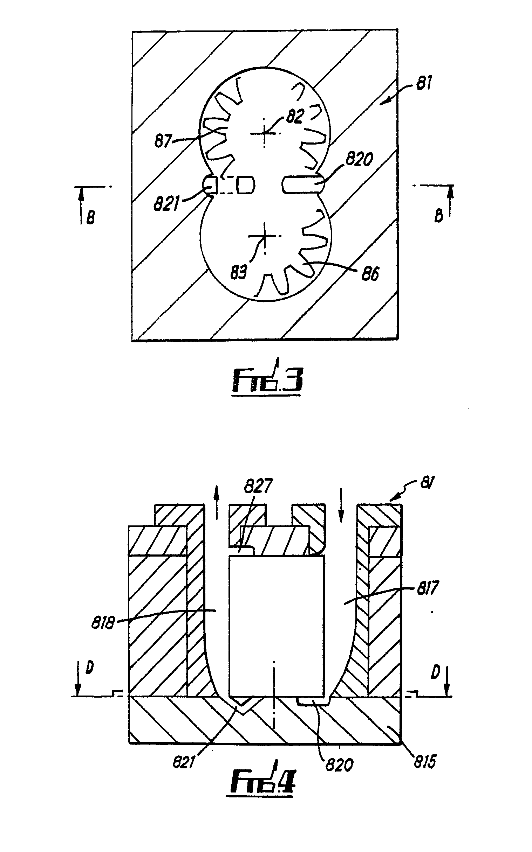

Referring to Figures 1 and 2, the gearpump is typically a triplex pump and comprises a housing indicated generally by the reference numeral 1 and three parallel arranged pairs of intermeshing gears with the gears of each pair mounted for rotation on corresponding vertical shafts 2 and 3 in the housing 1. The lowermost gears 4, 5 and 6 of each pair mounted on shaft 3 are visible in Figure 2 and the gears 6 and 7 of the lowermost pair are visible in Figure 1. Spacers are disposed between each pair of adjacent gears. Two of these spacers, referenced 10 and 11, are visible in Figure 2. The shafts 2 and 3 are rotatably mounted in bearings in a base plate 15 forming part of the housing 1 at their lower end and in bearings in an upper housing part 16 at their upper ends.

An inlet path 17 to the gears is defined between part of the housing on one side and the gears and an outlet path 18 from the gears is defined between the housing on the opposite side and the gears. The base plate 15 defines a channel 20 and a tunnel 21. The channel 20 provides a communication between the inlet path 17 and an axial entry to the teeth of the gears of the lower-most pair on the inlet side. The tunnel 21 provides a communication between an axial exist from the teeth of the gears of the lowermost pair on the outlet side and the outlet path 18. Both the tunnel 21 and the channel 20 are produced by typically spark erosion. The spacer 10 is relieved by a recess 25 on its uppermost face at the side adjacent the outlet path. The spacer 11 is relieved by a recess 26 on its lowermost face at the side adjacent the outlet path. The lower face of the upper part of the housing is similarly relieved by a recess 27.

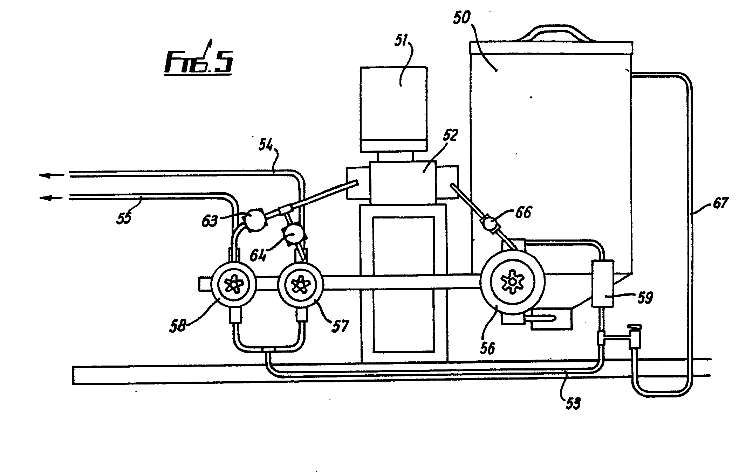

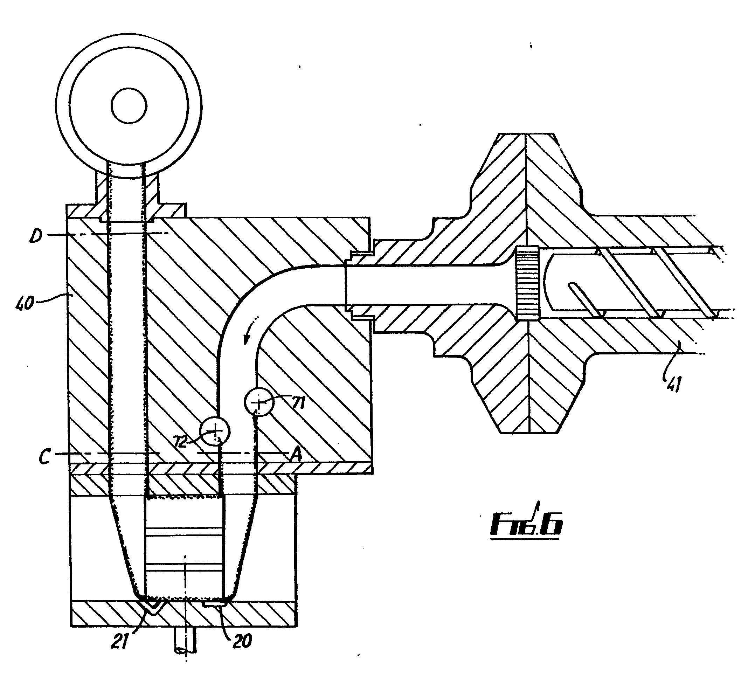

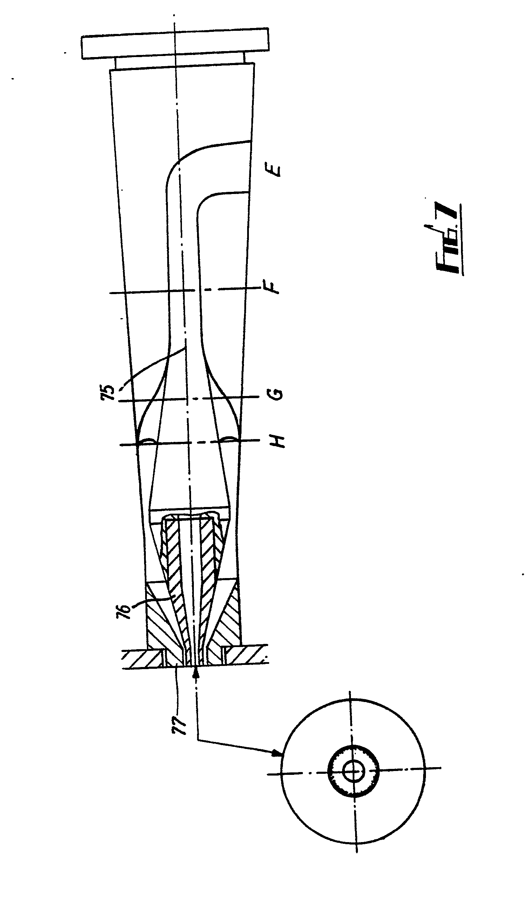

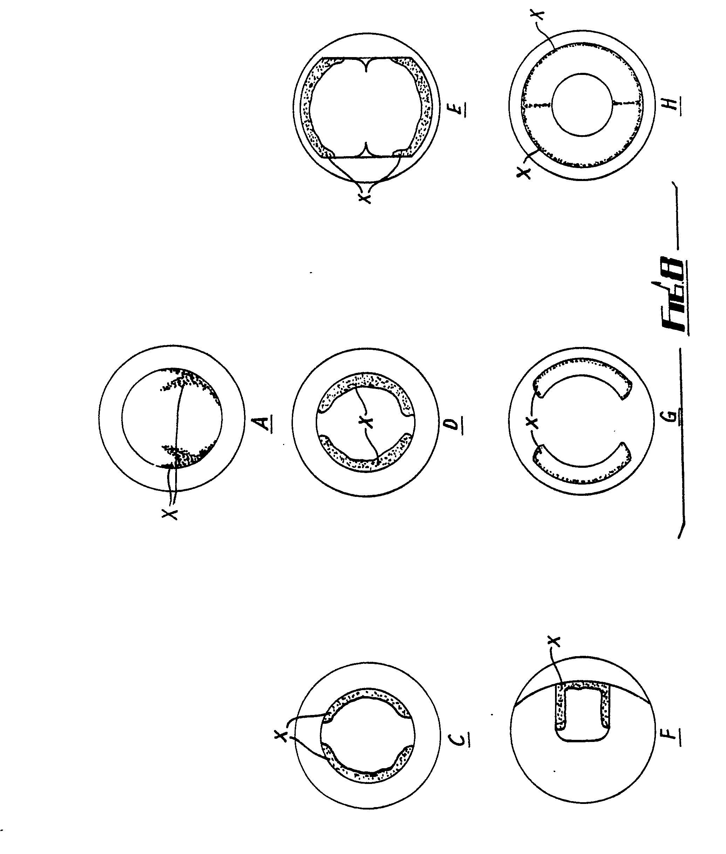

The above described gear pump forms part of apparatus for processing plastics material in which an additive, such as a colourant, 15 dispersed in a surface layer of the material. This apparatus also comprises a colourant pump metering system (shown in Figure 5), an outlet section incorporating a die (shown in Figure 7) a manifold 40 and an extruder 41 (see Figure 6). The relative disposition of the injection system, outlet section and gear pump is shown in the general view of Figure 6. The colourant injection system comprises a colourant reservoir 50 from which colourant is pumped by means of a motor 51 driven hydraulic actuator 52 via a supply pipe 53 to right and left side injector delivery pipes 54 and 55. These supply the right and left side injectors respectively disposed at 71 and 72 on Figure 6. The hydraulic actuator can also drive a booster pump 56 fitted with a gravity inlet and spring loaded outlet valves and disposed in the supply line 53 between reservoir 50 and two metering pumps 57 and 58 disposed in respective delivery pipes 54 and 55. An inline filter 59 is provided in the supply line.

Stop cocks 63 and 64 are provided for controlling hydraulic fluid supply to the metering pumps 57 and 58 and a stop cock 66 is provided for controlling hydraulic fluid supply to the pump 56. A purge line 67 is provided between the supply line 53 and the reservoir 50.

The outlet section (Figure 7) defines a flow tube 75 leading to a die having inner and outer die parts 76 and 77 and is connected to the gear pump by the manifold.

In use of the apparatus, synthetic plastics material of relatively high viscosity is supplied to the gear pump by the extruder 41 and enters the pump in lamina flow. Additive, in this case, colourant of relatively low viscosity, is added to the outer layers of the plastics material at the points 71 and 72 as that material flows along the input path 17 to the gear pump and flow along with the plastics material.

The combined materials enter the gear pump where they flow into the spaces between the gear teeth created by the rotational motion of the gears of each pair. As the gears open out of mesh the lower viscosity material is forced into the space created. The first flow is followed by that of more viscous material spreading the first material over the root of gear space. The gear space becomes full of combined material and is carried round to the exit port by the rotation of the gears. When the filled gear tooth spaces reach the region of the exit orifice, meshing with the teeth of the other gear of the pair causes the expulsion of the material in the gear spaces. Initially the expulsion is in the radial direction with respect to the rotational centre of the individual gears.

As the degree of meshing increases the radial flow from the gear space is restricted by the proximity of the gear filling the space. The decreasing enclosed volume of the gear space as the gears go further into mesh cause an increase in the forces acting on the material in the gear space. Axial flow, along the length of the gear, in particular along the gear space root, now occurs. The reliefs 25, 26 and 27 cut into the pump housing part 16 and spacers 10 and 11 reduce the pressure generated by this axial flow. The positioning of relief 27 in particular promotes axial flow in the gear teeth spaces in the upward direction which in turn directs colourant to the outer periphery of the flow along the outlet path 18.

The flow path for material expelled axially from the gear teeth spaces of the gears 6 and 7 of the lowermost pairs is via the tunnel 21 which enables colourant to be delivered to the outer periphery of the flow along the outlet path remote from the gear teeth. The advantage of being in close proximity to the wall defining the outlet path 18 is to place the less viscous secondary material into the more viscous primary material in a position where the velocity gradients within the materials are at their greatest and as such the shear rate is a maximum. This factor increases the degree of mixing and homogeneity in the outer layers of the primary material of the distribution of the secondary material. Delivery via tunnel 21 affects about half the periphery of the material flowing along the outlet path 18 and delivery via relief 27 affects about the other half of that periphery. This may be seen more particularly from Figure 8C. In this figure "X" denotes colourant doped areas. Axial flow of material (which should almost wholly be plastics material) in the gear teeth spaces of the gears of the central part (gear 5 only visible) is from the centre of the teeth towards the reliefs 25 and 26 at each end.

The channel 20 on the inlet side of pump inhibits the passage of blobs of colourant material in an unsheared state through the gear pump.

This channel 20 enables the secondary substances to be kept near the walls of the entry tube and to be introduced into the gear tooth space at the root of the space. In this position with the more viscous material and hence improve its absorbtion into the second material. The expulsion along the tunnel 21 as described above also increases the shear on the materials and thus improves the distribution of the second material in the outer layers of the first. Thus the channel and the tunnel reduce the risk of a blob passing through the gear pump and decrease the amount of secondary material within the inner layers of the first plastics material. After passage through the gear pump, the plastics material with the colourant concentrated in its outer layers flows up the outlet path 18 and through the flow tube 75 to the die 76, 77 where it is split and moulded around a wire, for example, passing through the die. The individual lettered views of Figure 8 show cross sections through the material flow at various correspondingly lettered points on Figures 6 and 7.

It will be appreciated that the above embodiment has been described by way of example only and that many variations are possible without departing from the scope of the invention as defined in the claims. One such variation is shown in Figures 3 and 4 which show a gear pump having a single pair of gears. In this embodiment parts equivalent to the parts of the embodiments of Figures 1 and 2 have been given the same reference prefixed by the number 8.

**Claims**

1. Apparatus for processing material comprising a gear pump, means for supplying material to the gear pump, and means for supplying an additive to the material in which the pump comprises one or more pairs of intermeshing gears (4, 5, 6, 7, 86, 87) rotatably disposed in a housing (1, 81) an inlet path (17, 817) to the gears and an outlet path (18, 818) from the gears characterised in that a tunnel (21, 821) is provided in the housing for conducting material from an axial exit from between the intermeshing teeth of the gears on the output side to the periphery of the outlet path on the side of that path remote from the gears and a channel (20, 820) is provided in the housing from the periphery of the inlet path (17, 817) on its side remote from the gear teeth to an axial entry to the teeth of the gears at the inlet side of the gears (4, 5, 6, 7, 86, 87).

2. Apparatus as claimed in claim 1, in which the two gears (4, 5, 6, 7, 86, 87) or each pair of intermeshing gears are on respective vertically arranged substantially aligned shafts (2, 3, 82, 83).

3. Apparatus as claimed in claim 2, in which the shafts (2, 3, 82, 83) are mounted in a base plate (15, 815).

4. Apparatus as claimed in claim 3, in which the base plate (15, 815) forms part of the housing (1, 81).

5. Apparatus as claimed in claim 3 or 4, in which the base plate (15, 815) defines the tunnel (21, 821).

6. Apparatus as claimed in any preceding claim, in which the tunnel (21, 821) is V-shaped, the respective arms thereof leading from the gear teeth and to the outlet path (18, 818).

7. Apparatus as claimed in any preceding claim, in which there is more than one pair of gears and the gears of each pair are separated by spacers (10, 11) from the gears of the or each adjacent pair.

8. Apparatus as claimed in claim 7, in which each spacer (10, 11) is relieved (25, 26) on one side to promote flow of additive axially along the teeth of the gears in one direction.

9. Apparatus as claimed in claim 8, in which the housing wall opposite to the housing wall defining the tunnel (21, 821) is relieved (27, 827) to promote flow of additive.

10. A method of processing a material including the steps of feeding the material along an inlet to the pump, introducing an additive into the material, operating the pump to transfer material from the inlet path (17, 817) to the pump to the outlet path (18, 818) from the pump whilst dispersing the additive into the surface of the material characterised by the steps of conducting material from an axial exit from the teeth of the gears (4, 5, 6, 7, 86, 87) of the gear pump on the outlet side of the pump to the periphery of the material in the outlet path (18, 818) remote from the gears via a route separate to that followed by the bulk of the material through the pump, and conducting material from the periphery of the inlet path on its side remote from the gear teeth to an axial entry to the teeth of the gears at the inlet side of the gears to inhibit the passage of blobs of additive in an unsheared state through the pump.

**Patentansprüche**

1. Vorrichtung zum Verarbeiten von Material, mit einer Getriebepumpe, mit Mitteln zum Zuführen von Material zu der Getriebepumpe und mit Mitteln, um dem Material einen Zusatz beizugeben, wobei die Pumpe ein oder mehrere in einem Gehäuse drehbar untergebrachte Paare kämmender Zahnräder (4, 5, 6, 7, 86, 87), einen Einlass (17, 81) zu den Zahnrädern und einen Auslass (18, 818) von den Zahnräderen aufweist, dadurch gekennzeichnet, dass im Gehäuse ein Tunnel (21, 821) vorgesehen ist, um Material von einem axialen Ausgang zwischen den kämmenden Zähnent der Zahnräder auf der Auslassseite zu der Peripherie des Auslasser auf der von den Zahnrädern entfernten Seite dieses Teils des Auslasses zu führen, und dass im Gehäuse ein Kanal (20, 820) vorgesehen ist, der von der Peripherie des Einlasses (17; 817) auf dessen von den Zähnen der Zahnräder entfernten Seite zu einem aixalen Einlass zu den Zähnen der Zahnräder an der Einlassseite der Zahnräder (4, 5, 6, 7, 86, 87) führt.

2. Vorrichtung nach Anspruch 1, dadurch gekennzeichnet, dass die beiden Zahnräder (4, 5, 6, 7, 86, 87) oder jedes Paar von miteindander kämmenden Zahnrädern sich auf zugeordneten senkrecht angeordneten im wesentlichen aufeinander ausgerichteten Wellen (2, 3, 82, 83) befinden.

3. Vorrichtung nach Anspruch 2, dadurch gekennzeichnet, dass die Wellen (2, 3, 82, 83) in einer Grundplatte (15, 815) montiert find.

4. Vorrichtung nach Anspruch 3, dadurch gekennzeichnet, dass die Grundplatte (15, 815) Teil des Gehäuses (1, 81) ist.

5. Vorrichtung nach Anspruch 3 oder 4, dadurch gekennzeichnet, dass die Grundplatte (15, 815) den Tunnel (21, 821) definiert.

6. Vorrichtung nach einem der vorhergehenden Ansprüche, dadurch gekennzeichnet, dass der Tunnel (21, 821) V-förmig ist, wobei seine Arme von den Zahnrädern zum Auslass (18, 818) führen.

7. Vorrichtung nach einem der vorhergehenden Ansprüchen, dadurch gekennzeichnet, dass mehr als eine Zahnradpaar vorhanden ist und dass die Zahnräder jedes Paares durch Anstandselemente (10, 11) von den Zahnrädern des oder jedes benachbarten Zahnradpaares getrennt sind.

8. Vorrichtung nach Anspruch 7, dadurch gekennzeichnet, dass jedes Abstandselement (10, 11) auf einer Seite so geformt ist (25, 26), dass der Fluss des Zusatzes axial entlang den Zähnen der Zahnräder in einer Richtung unterstützt wird.

9. Vorrichtung nach Anspruch 8, dadurch gekennzeichnet, dass die Gehäusewand, welche der Gehäusewand gegenüberliegt die den Tunnel (21, 821) bildet, so geformt ist (27, 827), dass sie den Fluss des Zusatzes fördert.

10. Verfahren zum Bearbeiten von Material einschliesslich der Schritte das Material in einem Einlass der Pumpe zuzuführen, dem Material einen Zusatz beizugeben, die Pumpe zu betätigen um Material aus dem Einlass (17, 817) zur Pumpe und durch den Auslass (18, 818) aus der Pumpe zu führen, während der Zusatz in die Oberfläche des Materials verteilt wird, dadurch gekennzeichnet, dass Material von einem axialen Ausgang von den Zähnen der Zahnräder (4, 5, 6, 7, 86, 87) der Getriebepumpe auf der Auslassseite der Pumpe zu der von den Zahnrädern entfernten Peripherie des Materials im Auslass (18, 818) über eine Bahn geführt wird, welche von derjenigen getrennt ist, welcher die Masse des Materials durch die Pumpe folgt, und dass Material von der Peripherie des Einlasses auf dessen den Zahnrädern entfernten Seite zu einem axialen Einlass zu den Zähnen der Zahnräder auf der Einlassseite der Zahnräder geführt wird, um den Durchtritt von Klumpmen des Zusatzes in unzerkleinertem Zustand durch die Pumpe zu verhindern.

**Revendications**

1. Appareil pour le traitement de matière comprenant une pompe à engrenages, des moyens pour alimenter la pompe en matière, et des moyens pour fournir un additif à la matière dans lequel la pompe comprend une ou plusieurs paires d'engrenages en prise (4, 5, 6, 7, 86, 87) montés rotatifs dans un carter (1, 81), une voie d'entrée (17, 817) vers les engrenages et une voie de sortie (18, 818) des engrenages, caractérisé par le fait qu'un tunnel (21, 821) est prévu dans le carter pour conduire la matière d'une sortie axiale d'entre les dents en prise des engrenages, du côté sortie, à la périphérie de la voie de sortie du côté de cette voie la plus éloignée des engrenages et un canal (20, 820) est prévu dans le carte, de la périphérie de la voie d'entrée (17, 817) sur son côté le plus éloigné des dents d'engrenage à une entrée axiale aux dents des engrenages du côté entrée des engrenages (4, 5, 6, 7, 86, 87).

2. Appareil selon la revendication 1, dans lequel les deux engrenages (4, 5, 6, 7, 86, 87) de chaque paire d'engrenages en prise sont montés sur des arbres respectifs disposés verticalement et sensiblement alignés (2, 3, 82, 83).

3. Appareil selon la revendication 2, dans lequel les arbres (2, 3, 82, 83) sont montés dans une plaque des base (15, 815).

4. Appareil selon la revendication 3, dans lequel la plaque de base (15, 815) fait partio du carter (1, 81).

5. Appareil selon la revendication 3 ou 4, dans lequel la plaque de base (15, 815) délimite le tunnel (21, 821).

6. Appareil selon l'une des revendications précédentes, dans lequel le tunnel (21, 821) est en forme de V, dont les bras respectifs partent des dents d'engrenages et aboutissent à la voie de sortie (18, 818).

7. Appareil selon l'une des revendications précédentes, dans lequel il comporte plus d'une paire d'engrenages et les engrenages de chaque paire sont séparés par dse pièces d'écartement (10, 11) des engrenages de la, ou de chaque, paire adjacente.

8. Appareil selon la revendication 7, dans lequel chaque pièce d'écartement (10, 11) est dégagée (25, 26) d'un côté pour inciter l'écoulement d'additif axialement le long des dents d'engrenages dans une direction.

9. Appareil selon la revendication 8, dans lequel la paroi de carter opposée à la paroi de carter délimitant le tunnel (21, 821) est dégagée (27, 827) pour inciter l'écoulement d'additif.

10. Procédé de traitement de matière dans lequel on amène la matière le long d'une entrée à la pompe, on introduit un additif dans la matière, on actionne la pompe pour transférer de la matière de la voie d'entrée (17, 187) à la pompe à la voie de sortie (18, 818) de la pompe tout en dispersant l'additif dans la surface de la matière, caractérisé par le fait que l'on conduit de la matière d'une sortie axiale des dents des engrenages (4, 5, 6, 7, 86, 87) de la pompe à engrenages, du côté sortie de la pompe, à la périphérie de la matière dans la voie de sortie (18, 818) la plus éloignée des engrenages, par une roule séparée de celle suivie par la charge de matière à travers la pompe, et on conduit de la matière de la périphérie de la voie d'entrée, de son côté le plus éloigné des dents d'engrenages, à une entrée axiale aux dents des engrenages du côté entrée des engrenages, pour empêcher le passage de pâtés d'additif à l'état non cisaillé à travers la pompe.

**Fig.1**

**Fig.2**

Fig.3

Fig.4

FIG.5

0 117 720

D

40

C

72

71

A

21

20

41

Fig.6

Fig.7

*FIG.8*